# EUROPEAN PATENT APPLICATION

(11) **EP 3 502 876 A1**
(43) Date of publication of application: **26.06.2019**
(21) Application number: 17850072.4
(22) Date of filing: 29.06.2017
(51) Int. Cl.: G06F 9/44, G06F 17/30

(54) **DEVICE AND METHOD FOR DISPLAYING EXTENSION POINT IN PAGE**

(30) Priority: 19.09.2016 CN 201610829818
(71) Applicant: Huawei Technologies Co., Ltd., Longgang District Shenzhen, Guangdong 518129 (CN)
(72) Inventor: ZHAO, Wen, Shenzhen Guangdong 518129 (CN); DAI, Yaya, Shenzhen Guangdong 518129 (CN)
(74) Representative: Gill Jennings & Every LLP
(86) International application number: PCT/CN2017/090882
(87) International publication number: WO 2018/049869

(57) **Abstract**

The present invention relates to the field of computer technologies, and discloses a page extension point presentation method. The method includes: determining an extension point placeholder in source code of a page when the page is displayed; determining information about a location of a corresponding extension point in the page based on the extension point placeholder; and presenting, in the page, a visual mark of the extension point based on the location information. When a page component is extended, the location of the extension point in the page can be directly determined based on an identifier of the extension point in the page. In this way, when searching for the location of the extension point in the page, a web page administrator does not need to determine, according to a customization manual and from source code of a baseline web page, a code segment corresponding to the extension point in the page, or perform tracing or searching layer by layer based on a hierarchical relationship and a nesting relationship of the code. Therefore, this overcomes a disadvantage that manual searching steps are relatively complex, and improves web page extension efficiency.

## Description

This application claims priority to Chinese Patent Application No. 201610829818.3, filed with the Chinese Patent Office on September 19, 2016 and entitled "PAGE EXTENSION POINT PRESENTATION APPARATUS AND METHOD", which is incorporated herein by reference in its entirety.

### TECHNICAL FIELD

The present invention relates to the field of computer technologies, and in particular, to a page extension point presentation apparatus and method.

### BACKGROUND

In a process of customizing and developing a front end of a web page, a baseline is a stable version of a software document or source code of the web page. Based on the baseline, a web page administrator may further customize the web page. For example, a new page element is obtained through extension at a reserved location in a baseline web page.

In the prior art, when developing a baseline web page, a web page developer reserves an extension point in source code of the baseline web page, and provides the web page administrator with a customization manual that indicates the reserved extension point. When the web page administrator needs to extend the web page, for example, when the web page administrator adds a new page element, the web page administrator may determine, according to the customization manual, a location or an area in the page that is the reserved extension point.

In the prior art, a reserved location that is of an extension point in a page and that is in the baseline web page needs to be determined by the web page administrator according to the customization manual, and steps of manually determining the location of the extension point are relatively complex and a workload is heavy, thereby causing relatively low web page element extension efficiency.

### SUMMARY

The present invention provides a page extension point presentation apparatus and method, to overcome a prior-art disadvantage that web page element extension efficiency is relatively low because a reserved location that is of an extension point in a page and that is in a baseline web page needs to be determined by a web page administrator according to a customization manual, and steps of manually determining a location of the extension point are relatively complex and a workload is heavy.

According to a first aspect, the present invention provides a page extension point presentation method, and the method includes:
determining an extension point placeholder in source code of a page when the page is displayed, where the extension point placeholder is corresponding to an extension point in the page, and the extension point is an area that is used to extend a page element and that is in the page;
determining information about a location of the corresponding extension point in the page based on the extension point placeholder; and presenting,
in the page, a visual mark of the extension point based on the location information.

When a page component is extended, the location of the extension point in the page can be directly determined based on the identifier of the extension point in the page. In this way, when searching for the location of the extension point in the page, a web page administrator does not need to determine, according to a customization manual and from source code of a baseline web page, a code segment corresponding to the extension point in the page, or perform tracing or searching layer by layer based on a hierarchical relationship and a nesting relationship of the code. Therefore, this resolves a problem that manual searching steps are relatively complex, and improves web page extension efficiency.

In a possible design, the method further includes:
presenting, when a designated operation for the visual mark is received, a code editing interface corresponding to the extension point; and receiving code entered in the code editing interface.

The code editing interface is directly opened and presented when the visual mark is triggered, and therefore, a step of searching for a file name by the web page administrator based on the manual and a step of manually opening the code editing interface are omitted. In this way, manpower is saved, and efficiency of writing code by the web page administrator is improved.

In another possible design, the determining information about a location of the corresponding extension point in the page based on the extension point placeholder includes:
obtaining, based on the extension point placeholder, the information about the location of the extension point in the page by invoking an element object rectangular boundary obtaining method.

The information about the location of the extension point in the page is obtained by invoking the element object rectangular boundary obtaining method, so that information about an accurate location of a rectangular area relative to a page bezel can be quickly obtained, and the information about the location of the extension point in the page is efficiently obtained by using relatively small overheads.

In still another possible design, the method may include: establishing an association relationship between the visual mark of the extension point and an identifier of the extension point.

In yet another possible design, the extension point placeholder includes the identifier of the extension point when the code editing interface corresponding to the extension point is presented, and the presenting a code editing interface corresponding to the extension point when a designated operation for the visual mark is received includes:
when the designated operation for the visual mark is received, obtaining the identifier that is of the extension point and that is associated with the visual mark; performing searching in the source code of the page based on the identifier of the extension point, to obtain a row number that is of the extension point placeholder and that is in the source code of the page;
displaying the extension point placeholder in the source code of the page according to the row number, and displaying an editing portal control corresponding to the extension point placeholder; and presenting the code editing interface when a trigger operation for the editing portal control is received.

The extension point placeholder in the source code is presented when the designated operation for the visual mark is received, so that the web page administrator can learn of information included in the extension point placeholder. The editing portal control is further set, so that the web page administrator can quickly edit, by triggering the control, a page element displayed at the extension point. In a process of presenting the code editing interface, a specific location that is of the extension point placeholder of the selected extension point and that is in the source code of the page is presented to the web page administrator or a user, so that richer information can be presented.

In a possible design, the method further includes:
saving the code in a file independent of the source code of the page when a saving operation for the code entered in the code editing interface is received, where the file is associated with the identifier of the extension point.

The code of the extension point is separately saved, so that editing of the page element at the extension point and editing of the page are independent of each other and do not affect each other, and editing of the page element and upgrade of the page may be separately performed. Therefore, page maintenance difficulty is reduced, and page maintenance efficiency is improved.

In another possible design, the method further includes:
after the saving operation for the code entered in the code editing interface is received, performing rendering on a corresponding page element based on the code; and displaying, in an area corresponding to the extension point in the page, the page element obtained through the rendering.

After the page administrator or the user edits the code of the extension point and saves the code, an effect of presenting an edited page element in the page can be presented in the page in a timely manner, and this helps the page administrator or the user views an editing effect.

According to a second aspect, an embodiment of the present invention provides an electronic device, and the electronic device includes a processor and a memory. The processor is configured to execute an instruction stored in the memory. The processor executes the instruction to implement the page extension point presentation method provided in the first aspect or the possible designs of the first aspect.

According to a third aspect, an embodiment of the present invention provides a page extension point presentation apparatus. The page extension point presentation apparatus includes at least one unit, and the at least one unit is configured to implement the page extension point presentation method provided in the first aspect or the possible designs of the first aspect.

According to a fourth aspect, an embodiment of the present invention further provides a computer readable medium, and the computer readable medium stores an instruction used to implement the page extension point presentation method provided in the first aspect or the possible designs of the first aspect.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an electronic device according to an example embodiment of the present invention;
FIG. 2A and FIG. 2B are a flowchart of a page extension point presentation method according to an embodiment of the present invention;
FIG. 3 is a schematic diagram of a visual mark based on the embodiment shown in FIG. 2A and FIG. 2B;
FIG. 4A and FIG. 4B are a schematic diagram of a code editing interface based on the embodiment shown in FIG. 2A and FIG. 2B;
FIG. 5A and FIG. 5B are a schematic diagram of a page on which rendering is not performed and a page obtained through rendering that are based on the embodiment shown in FIG. 2A and FIG. 2B;
FIG. 6 is a schematic diagram of a page based on the embodiment in FIG. 2A and FIG. 2B; and
FIG. 7 is a block diagram of a page extension point presentation apparatus according to an embodiment of the present invention.

### DESCRIPTION OF EMBODIMENTS

To make the objectives, technical solutions, and advantages of the present invention clearer, the following further describes the implementations of the present invention in detail with reference to the accompanying drawings.

A "module" mentioned in this specification is a program or an instruction that is stored in a memory and can implement some functions. A "unit" mentioned in this specification is a functional structure divided based on logic. The "unit" may be implemented by only hardware, or implemented by a combination of software and hardware.

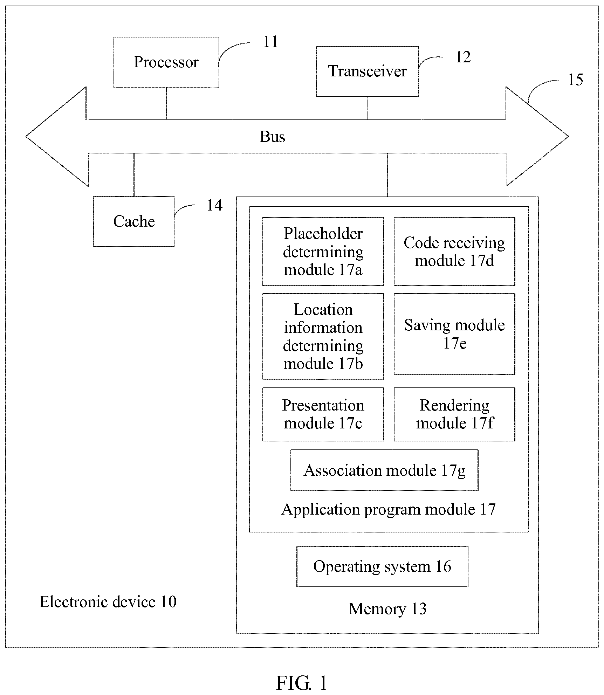

Referring to FIG. 1, FIG. 1 is a schematic structural diagram of an electronic device according to an example embodiment of the present invention.

An electronic device 10 includes a processor 11 and a transceiver 12.

The processor 11 may be a central processing unit, a network processor, a coprocessor, or the like, and may include one or more processing cores. The processor 11 implements various function applications and data processing by running a software program and a module.

Optionally, the electronic device 10 further includes components such as a memory 13, a cache 14, and a bus 15.

The memory 13 and the cache 14 are separately connected to the processor 11 by using the bus 15. The cache 14 is configured to cache some intermediate data generated in a calculation process of the processor 11.

The memory 13 may be configured to store a software program and a module.

The memory 13 may store an operating system 16 and an application program module 17 required for at least one function. The operating system 16 may be an operating system such as a real-time operating system (Real Time eXecutive, RTX), Linux, Unix, Windows, or OS X. The application program module 17 may include a placeholder determining module 17a, a location information determining module 17b, a presentation module 17c, a code receiving module 17d, a saving module 17e, a rendering module 17f, and an association module 17g.

The placeholder determining module 17a is configured to determine an extension point placeholder in source code of a page when the page is displayed, where the extension point placeholder is corresponding to an extension point in the page, and the extension point is an area that is used to extend a page element and that is in the page. The location information determining module 17b is configured to: determine information about a location of the corresponding extension point in the page based on the extension point placeholder; and obtain, based on the extension point placeholder, the information about the location of the extension point in the page by invoking an element object rectangular boundary obtaining method.

The presentation module 17c is configured to: present, in the page, a visual mark of the extension point based on the location information; when a designated operation for the visual mark is received, present a code editing interface corresponding to the extension point; when the designated operation for the visual mark is received, obtain an identifier that is of the extension point and that is associated with the visual mark; perform searching in the source code of the page based on the identifier of the extension point, to obtain a row number that is of the extension point placeholder and that is in the source code of the page; display the extension point placeholder in the source code of the page according to the row number, and display an editing portal control corresponding to the extension point placeholder; and present the code editing interface when a trigger operation for the editing portal control is received.

The code receiving module 17d is configured to receive code entered in the code editing interface.

The saving module 17e is configured to save the code in a file independent of the source code of the page when a saving operation for the code entered in the code editing interface is received, where the file is associated with the identifier of the extension point.

The rendering module 17f is configured to: after the saving operation for the code entered in the code editing interface is received, perform rendering on a corresponding page element based on the code.

The association module 17g is configured to establish an association relationship between the visual mark of the extension point and the identifier of the extension point.

The presentation module 17c is further configured to display, in an area corresponding to the extension point in the page, a page element obtained through the rendering.

The electronic device 10 may be an electronic device such as a PC (English: Personal Computer), a PAD (English: Portable Android Device), a laptop computer (English: laptop computer), a mobile workstation (English: Mobile Workstation), or a smartphone.

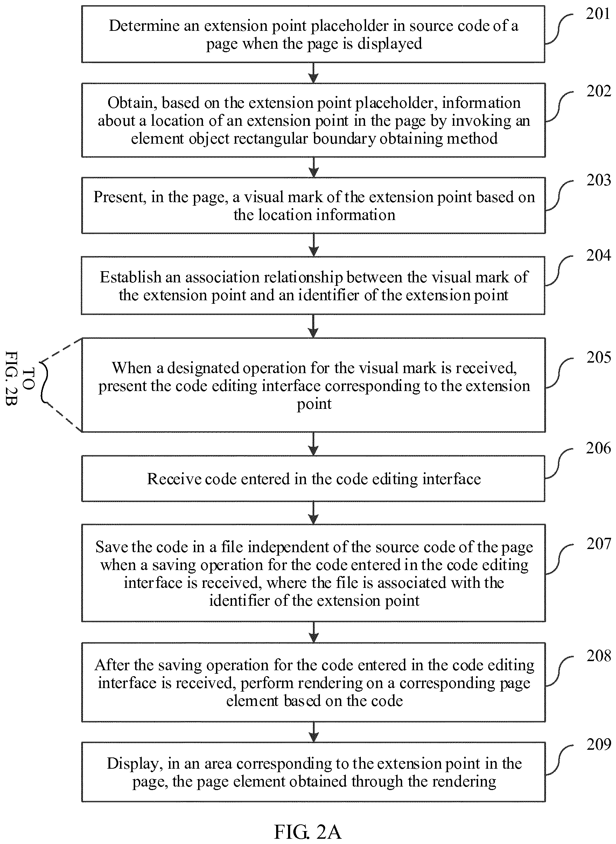

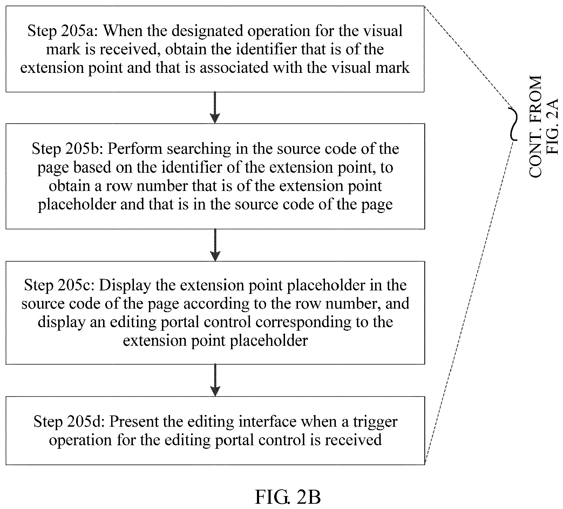

Referring to FIG. 2A and FIG. 2B, FIG. 2A and FIG. 2B are a flowchart of a page extension point presentation method according to an embodiment of the present invention. The method may be applied to the electronic device shown in FIG. 1. As shown in FIG. 2A and FIG. 2B, the page extension point presentation method may include the following steps.

Step 201: Determine an extension point placeholder in source code of a page when the page is displayed.

When displaying the page, a computer determines the extension point placeholder based on an attribute of an extension point by traversing all source code corresponding to the page. The extension point placeholder may be represented by a div tag in the source code. For example, an extension point placeholder in the source code of the page may be as follows:

```
           <div id="123456" class="u-extend" desc="the extension point is used to
           customize XXX"></div>.
```

In the foregoing extension point placeholder, "id" is an identifier of the extension point placeholder, and is used to uniquely identify the extension point placeholder; "class" is an attribute of the div tag; "u-extend" is used to indicate that the div tag is an extension point placeholder, in other words, the computer can determine the extension point placeholder in the source code by searching the source code for the div tag whose class is "u-extend"; and "desc" is a comment of the extension point placeholder, and the comment is used to explain a function of the extension point placeholder to a web page administrator and a web page developer.

The page may be a customized page of a web page opened by a web page administrator in a web page extension tool, or the page may be a page opened in a browser by a user of the web page.

The extension point placeholder is corresponding to an extension point in the displayed page. The extension point is an area in the page, and the area is used to extend a page element. For example, a to-be-extended page element may be an element such as a text, an image, a button, a check box, or an input box in the page. Step 201 may be implemented by the processor 11 in FIG. 1 by executing the placeholder determining module 17a.

Step 202: Obtain, based on the extension point placeholder, information about a location of an extension point in the page by invoking an element object rectangular boundary obtaining method.

After the element object rectangular boundary obtaining method is invoked by the computer, the information about the location, relative to the page, of the extension point corresponding to the extension point placeholder is returned. The location information is returned in two manners based on whether the page supports a scrolling operation. An area indicated by the location information returned in the method is a rectangular area whose four edges are respectively parallel to corresponding bezels of the page. A left bezel of the page is used as a reference for both a left location and a right location of the rectangular area, and returned values are distances from the left location and the right location to the left bezel. A top bezel of the page is used as a reference for both a top location and a bottom location of the rectangular area, and returned values are distances from the top location and the bottom location to the top bezel.

Optionally, a web environment is used as an example. The element object rectangular boundary obtaining method may be an Element.getBoundingClientRect() method.

In a manner, when the page does not support the scrolling operation, that is, when all displayed content in the page can be viewed without a need to perform scrolling in the page in a horizontal or vertical direction, the information that is about the location of the extension point in the page and that is returned in the method includes only a distance from the extension point to a bezel of the page. Usually, the distance is expressed in a unit of a pixel.

In another manner, when the page supports the scrolling operation, the information that is about the location of the extension point in the page and that is returned in the method includes a distance from the extension point to the bezel of the page, and a relative distance by which a horizontal (or vertical) scroll bar is moved.

For example, the web environment is used as an example. In terms of representation of information in the Element.getBoundingClientRect() method, a distance between a left edge of the extension point and the left bezel of the page may be represented by left information in the Element.getBoundingClientRect() method, and a distance by which the extension point is scrolled from the left to the right may be represented by Element. scrollLeft in the Element.getBoundingClientRect() method. A distance between a top edge of the extension point and the top bezel of the page may be represented by top information in the Element.getBoundingClientRect() method, and a distance by which the extension point is scrolled downwards may be represented by Element.scrollTop in the Element.getBoundingClientRect() method. In addition, a distance between a right edge of the extension point and the left bezel of the page may be represented by right information in the Element.getBoundingClientRect() method, and a distance between a bottom edge of the extension point and the top bezel of the page may be represented by "bottom" in the Element.getBoundingClientRect() method.

For example, the distance from the left edge of the extension point to the left bezel of the page is 20 pixels, the distance from the top edge of the extension point to the top bezel of the page is 30 pixels, the horizontal scroll bar is not moved, the vertical scroll bar is moved downwards by a distance of 25 pixels, a width of the extension point is 30 pixels, and a height of the extension point is 20 pixels. In this case, the information that is about the location of the extension point and that is returned in method is as follows: The distance from the left edge of the extension point to the left bezel of the page is 20 pixels, the distance from the top edge of the extension point to the top bezel of the page is 55 pixels, a distance from the right edge of the extension point to the left bezel of the page is 50 pixels, and a distance from the bottom edge of the extension point to the top bezel of the page is 75 pixels.

Step 202 may be implemented by the processor 11 in FIG. 1 by executing the location information determining module 17b.

Step 203: Present, in the page, a visual mark of the extension point based on the location information.

It may be learned from step 202 that the obtained location information indicates a rectangular area, and herein a central location of the rectangular area may be used as a center of the visual mark, to present the visual mark. The visual mark is used to present an eye-catching location to the web page administrator. For example, the visual mark may be an icon with a special shape, or may have an eye-catching color. The visual mark may be in a form of a control.

Step 203 may be implemented by the processor 11 in FIG. 1 by executing the presentation module 17c.

Step 204: Establish an association relationship between the visual mark of the extension point and an identifier of the extension point.

In step 204, an association relationship is established between the visual mark of the extension point and the identifier of the extension point. Correspondingly, if there are a plurality of extension points in one page, an association relationship between a visual mark and an identifier that are corresponding to each of the plurality of extension points is established for the extension point. For example, if the visual mark is in the form of the control, the association relationship may be included in code of the visual mark.

Step 204 may be implemented by the processor 11 in FIG. 1 by executing the presentation module 17c.

Step 205: When a designated operation for the visual mark is received, present a code editing interface corresponding to the extension point.

In this embodiment of the present invention, if the foregoing page is a customized page of a web page that is opened by a web page administrator in a web page extension tool, the web page administrator may further directly access, by performing an operation on the visual mark, the code editing interface corresponding to the extension point.

The designated operation for the visual mark may be entered by using any type of input device that can be used by the web page administrator. For example, the input device may be a mouse, and the designated operation may be clicking, double-clicking, right-clicking, or clicking a scroll wheel; or the input device may be a keyboard, and the designated operation may be pressing a particular single key or a group of keys; or the input device may be a touchpad, and the designated operation may be a particular gesture track.

When the computer receives the designated operation for the visual mark, the computer presents the code editing interface corresponding to the extension point. The web page administrator can enter code in the code editing interface.

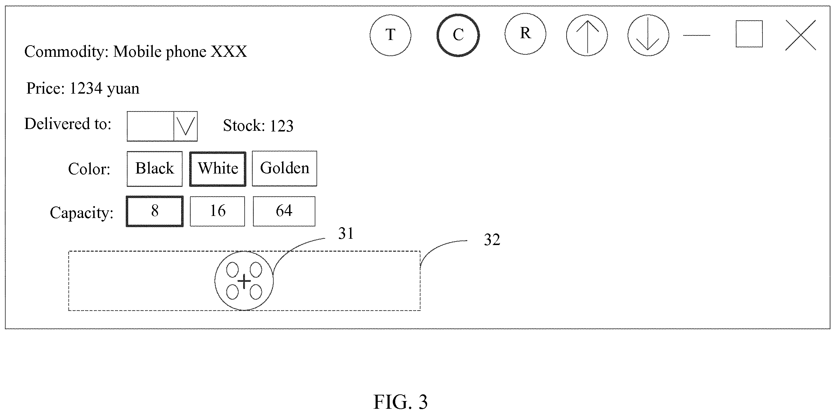

Referring to FIG. 3, FIG. 3 is a schematic diagram of a visual mark based on the embodiment shown in FIG. 2A and FIG. 2B. A visual mark 31 is located in a page, and a center of the visual mark 31 may be located at a center of an extension point 32.

Optionally, the extension point placeholder in step 205 includes an identifier of the extension point. In step 205, step 205a, step 205b, step 205c, and step 205d may be sequentially performed, to implement an effect of presenting, when a designated operation for the visual mark is received, a code editing interface corresponding to the extension point.

Step 205 may be implemented by the processor 11 in FIG. 1 by executing the presentation module 17c.

Step 205a: When the designated operation for the visual mark is received, obtain the identifier that is of the extension point and that is associated with the visual mark.

The identifier of the extension point is used to uniquely identify an extension point placeholder in source code. For example, the identifier of the extension point may be "id" of the extension point placeholder.

Step 205a may be implemented by the processor 11 in FIG. 1 by executing the presentation module 17c.

Step 205b: Perform searching in the source code of the page based on the identifier of the extension point, to obtain a row number that is of the extension point placeholder and that is in the source code of the page.

In the source code, each row of code has a unique row number. The computer may perform searching in the source code of the page based on the identifier of the extension point, to search for a number of a row in which the identifier is located.

Step 205b may be implemented by the processor 11 in FIG. 1 by executing the presentation module 17c.

Step 205c: Display the extension point placeholder in the source code of the page according to the row number, and display an editing portal control corresponding to the extension point placeholder.

An appearance of the editing portal control of the extension point placeholder may be an icon with a special shape, may have an eye-catching color, or may be a special character shape.

Step 205c may be implemented by the processor 11 in FIG. 1 by executing the presentation module 17c.

Step 205d: Present the code editing interface when a trigger operation for the editing portal control is received.

For the trigger operation for the editing portal control, refer to an explanation of the trigger operation in step 205. Details are not described herein again.

Step 205d may be implemented by the processor 11 in FIG. 1 by executing the presentation module 17c.

Step 206: Receive code entered in the code editing interface.

Herein, the code may be entered by the web page administrator, and an input method includes but is not limited to the following: entering the code by using an input device or copying code from a storage medium to enter the code. The computer receives the code entered by the web page developer in the code editing interface.

Step 206 may be implemented by the processor 11 in FIG. 1 by executing the code receiving module 17d.

Step 207: Save the code in a file independent of the source code of the page when a saving operation for the code entered in the code editing interface is received, where the file is associated with the identifier of the extension point.

The computer separately saves the code in the file when receiving the saving operation for the code entered in the code editing interface. When being separately saved in the file, the code is not affected by a change of the code in the source code of the page. Therefore, optimization and upgrade of the page and editing of the extension point can be separate from each other in the page and do not affect each other. This improves independence of each part in the page, and facilitates page content editing and modification.

In step 207, the file that saves the code entered in the code editing interface is associated with the identifier of the extension point, and specifically, a saving path of the file may be associated with the identifier of the extension point.

Optionally, the computer may remove the extension point from the page after receiving the saving operation for the code entered in the code editing interface, so that the extension point is no longer invisible.

For example, the file independent of the source code of the page may be a file whose file suffix is ".uslx", and the file may include the following content:

```
           <script id="xxxid" type="text/u-meta">
           ... customized content...
           </script>
```

In the file, "id" is the identifier of the extension point, and for "type", "text/u-meta" is used to identify extended content, to facilitate frame parsing and rendering of the page.

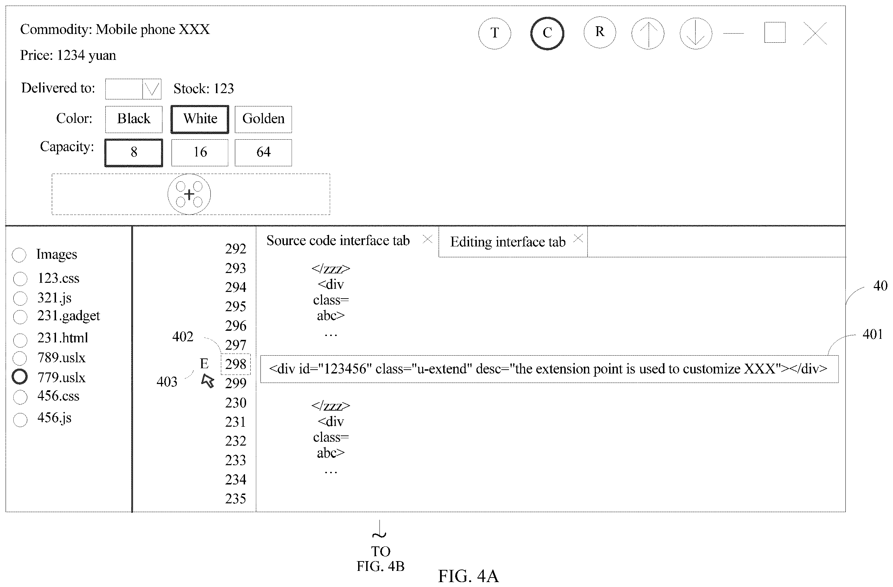

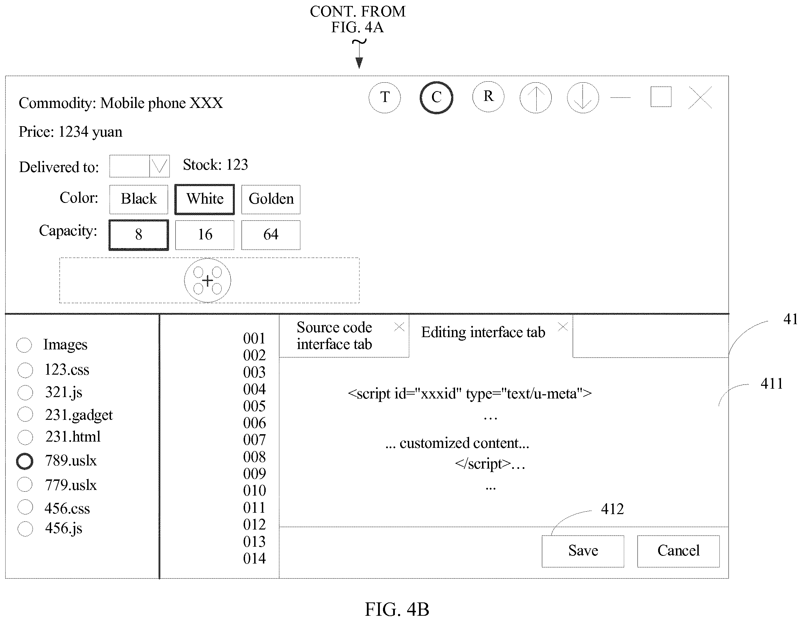

Referring to FIG. 4A and FIG. 4B, FIG. 4A and FIG. 4B are a schematic diagram of a code editing interface based on the embodiment shown in FIG. 2A and FIG. 2B. An identifier 401 of an extension point is located in a source code interface 40 of the page, a row number 402 corresponding to the identifier 401 of the extension point is tagged in front of a code row in which the identifier 401 of the extension point is located, and an editing portal control 403 is further displayed in front of the row number 402. As shown in the figure, the editing portal control 403 may be in a shape of a capital letter E. When the editing portal control 403 is triggered, the computer displays a code editing interface 41. In an editing area 411 in the code editing interface 41, the web page administrator may enter code, and edit, by using the code, a function of a page element displayed at the extension point.

The source code interface 40 and the code editing interface 41 may be different tab pages in a same page. When the editing portal control 403 in the source code interface 40 is triggered, for example, when the editing portal control 403 is clicked by using a mouse, a tab page corresponding to the code editing interface 41 is presented. When the code editing interface 41 is in an open state, the computer switches from the tab page of the source code interface 40 to the tab page of the code editing interface 41; or when the code editing interface 41 is in a closed state, the computer finds a file that saves the code editing interface 41, opens the file, and switches from currently displaying the tab page of the source code interface 40 to displaying the tab page of the code editing interface 41. After entering required code in the code editing interface 41, the web page administrator may click a saving button 412 to save the code. The computer separately saves, in a file, the code entered in the code editing interface. Step 207 may be implemented by the processor 11 in FIG. 1 by executing the saving module 17e.

Step 208: After the saving operation for the code entered in the code editing interface is received, perform rendering on a corresponding page element based on the code. The computer reads the code entered in the code editing interface, and performs rendering on the corresponding page element, so that the page element can implement, in the page, a function indicated by the code.

Step 208 may be implemented by the processor 11 in FIG. 1 by executing the rendering module 17f.

Step 209: Display, in an area corresponding to the extension point in the page, a page element obtained through the rendering.

The page element obtained through the rendering may be a component such as a button, a check box, or an input box. The component is displayed in the area corresponding to the extension point. A specific display method may be first overlapping a center of the component and a center of the extension point, and then displaying the component.

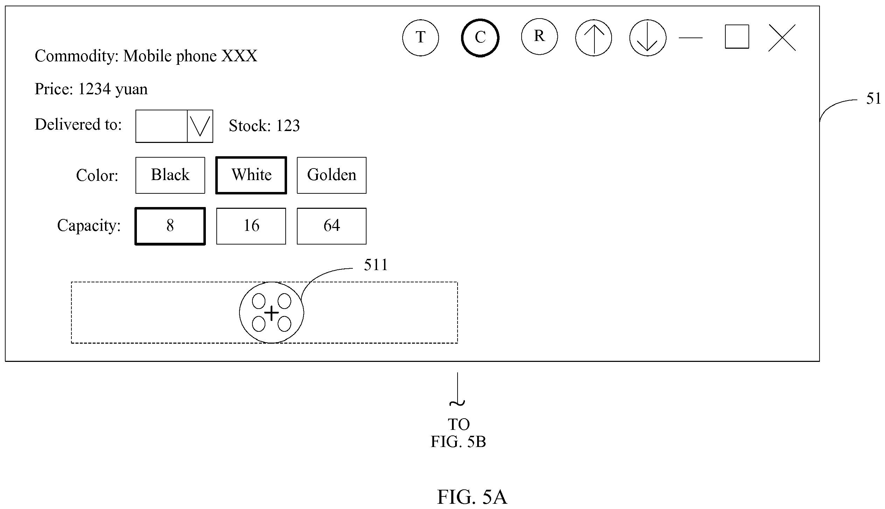

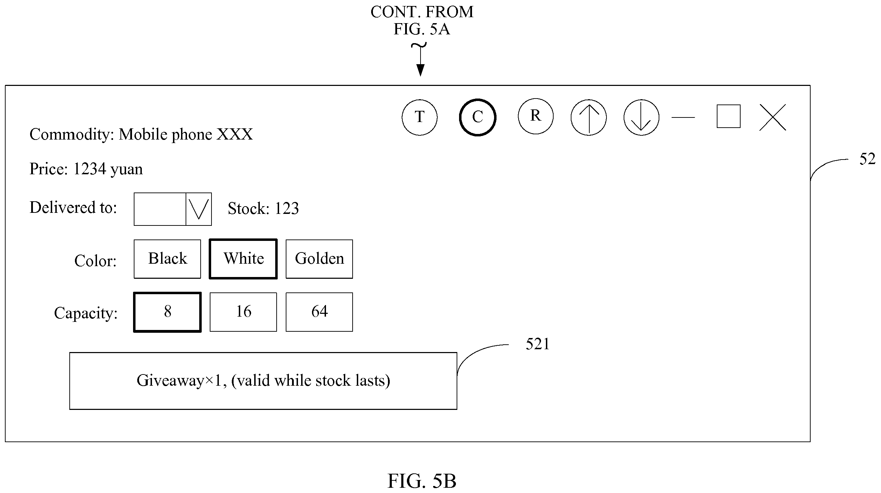

Referring to FIG. 5A and FIG. 5B, FIG. 5A and FIG. 5B are a schematic diagram of a page on which rendering is not performed and a page obtained through rendering that are based on the embodiment shown in FIG. 2A and FIG. 2B. In a page 51 on which rendering is not performed, a visual mark 511 is still displayed at a location of an extension point. In this case, although code of a component at the location of the extension point is entered in the code editing interface, rendering is not performed on the code. Therefore, both a displayed appearance and a function of the visual mark do not change. In a page 52 that includes a page element obtained through the rendering, a page element 521 obtained through the rendering is displayed at the location of the extension point, and the page element 521 has a corresponding visual appearance and a corresponding function. For example, the page element 521 in FIG. 5B is a text presentation box, and characters "giveaway×1, (valid while stock lasts)" in the text presentation box may be normally displayed after rendering is performed.

Step 209 may be implemented by the processor 11 in FIG. 1 by executing the presentation module 17c.

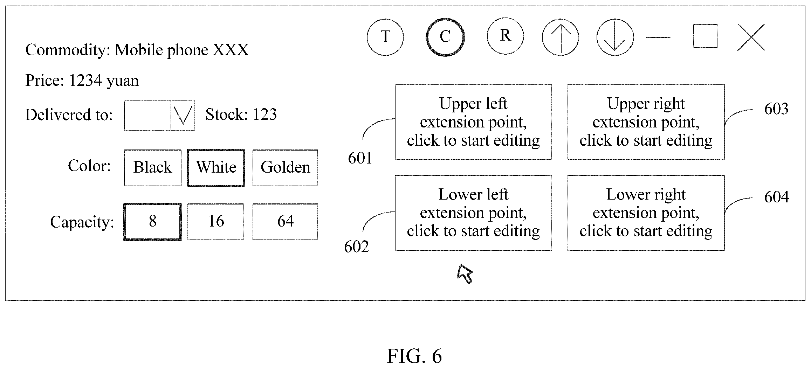

In a possible implementation of this embodiment of this disclosure, referring to FIG. 6, FIG. 6 is a schematic diagram of a page based on the embodiment shown in FIG. 2A and FIG. 2B. When displaying the page, the computer determines the extension point placeholder in the source code of the page, and displays, in the page based on the location information in the extension point placeholder, a prompt button 601, a prompt button 602, a prompt button 603, a prompt button 604, and the like that include the location information. The location information of the corresponding extension point is written on each prompt button, and the location information is used to inform the web page administrator of the location of the extension point. When any one of the prompt button 601 to the prompt button 604 is triggered, for example, when the prompt button 604 is triggered by performing a clicking operation by using a mouse, the page jumps to the source code interface 40 shown in FIG. 4A. Optionally, the page may directly jump to the code editing interface 41 shown in FIG. 4B, so that the web page administrator enters the code, and the computer continues performing step 207 to step 209 to complete rendering of the page element.

The web page administrator completes extension of the page element, and advertises a customized page in an entire network. When requesting the customized page by using a browser in a terminal, a user may obtain the source code of the page and the separately saved file. An electronic device of the user finds the identifier of the extension point in the source code by traversing the source code, finds the separately saved file based on an association relationship between the identifier of the extension point and the separately saved file, and performs rendering on a local page based on the file, to complete page customization of the local page. The web page administrator may update, according to the method, a same page in the entire network with a page customized by the web page administrator.

In conclusion, in the page extension point presentation method shown in this embodiment of the present invention, the extension point placeholder in the source code of the page is determined when the page is displayed; the information about the location of the extension point in the page is obtained based on the extension point placeholder by invoking the element object rectangular boundary obtaining method; the visual mark of the extension point is presented in the page based on the location information; the code editing interface corresponding to the extension point is presented when the designated operation for the visual mark is received; the code entered in the code editing interface is received; the code is saved in the file independent of the source code of the page when the saving operation for the code entered in the code editing interface is received; after the saving operation for the code entered in the code editing interface is received, rendering is performed on the corresponding page element based on the code; and the page element obtained through the rendering is displayed in the area corresponding to the extension point in the page. When a page component is extended, the location of the extension point in the page can be directly determined based on the identifier of the extension point in the page. In this way, when searching for the location of the extension point in the page, a web page administrator does not need to determine, according to a customization manual and from source code of a baseline web page, a code segment corresponding to the extension point in the page, or perform tracing or searching layer by layer based on a hierarchical relationship and a nesting relationship of the code. Therefore, this overcomes a disadvantage that manual searching steps are relatively complex, and improves web page extension efficiency.

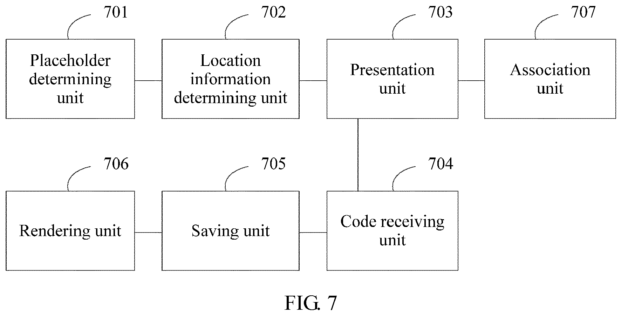

Referring to FIG. 7, FIG. 7 is a block diagram of a page extension point presentation apparatus according to an embodiment of the present invention. The apparatus may be implemented, by using hardware or a combination of hardware and software, as a part or all of the electronic device 10 shown in FIG. 1, and is configured to perform some or all of the steps in FIG. 2A and FIG. 2B that are performed by an electronic device. The apparatus may include a placeholder determining unit 701, a location information determining unit 702, a presentation unit 703, a code receiving unit 704, a saving unit 705, a rendering unit 706, or an association unit 707.

The placeholder determining unit 701 has a function the same as or similar to that of the placeholder determining module 17a.

The location information determining unit 702 has a function the same as or similar to that of the location information determining module 17b.

The presentation unit 703 has a function the same as or similar to that of the presentation module 17c.

The code receiving unit 704 has a function the same as or similar to that of the code receiving module 17d.

The saving unit 705 has a function the same as or similar to that of the saving module 17e.

The rendering unit 706 has a function the same as or similar to that of the rendering module 17f.

The association unit 707 has a function the same as or similar to that of the association module 17g.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, an optical disc, or the like.

The foregoing descriptions are merely examples of embodiments of the present invention, but are not intended to limit the present invention. Any modification, equivalent replacement, and improvement made without departing from the spirit and principle of the present invention shall fall within the protection scope of the present invention.

## Claims

1. A page extension point presentation apparatus, wherein the apparatus comprises:
a placeholder determining unit, configured to determine an extension point placeholder in source code of a page when the page is displayed, wherein the extension point placeholder is corresponding to an extension point in the page, and the extension point is an area that is used to extend a page element and that is in the page;
a location information determining unit, configured to determine information about a location of the corresponding extension point in the page based on the extension point placeholder; and
a presentation unit, configured to present, in the page, a visual mark of the extension point based on the location information.

2. The apparatus according to claim 1, wherein:
the presentation unit is further configured to: when a designated operation for the visual mark is received, present a code editing interface corresponding to the extension point;
the apparatus further comprises a code receiving unit; and
the code receiving unit is configured to receive code entered in the code editing interface.

3. The apparatus according to claim 1, wherein the location information determining unit is specifically configured to:
obtain, based on the extension point placeholder, the information about the location of the extension point in the page by invoking an element object rectangular boundary obtaining method.

4. The apparatus according to claim 2, wherein the apparatus further comprises:
an association unit, configured to establish an association relationship between the visual mark of the extension point and an identifier of the extension point.

5. The apparatus according to claim 4, wherein when presenting the code editing interface corresponding to the extension point, the presentation unit is specifically configured to:
when the designated operation for the visual mark is received, obtain the identifier that is of the extension point and that is associated with the visual mark;
perform searching in the source code of the page based on the identifier of the extension point, to obtain a row number that is of the extension point placeholder and that is in the source code of the page;
display the extension point placeholder in the source code of the page according to the row number, and display an editing portal control corresponding to the extension point placeholder; and
present the code editing interface when a trigger operation for the editing portal control is received.

6. The apparatus according to claim 5, wherein the apparatus further comprises a saving unit; and
the saving unit is configured to save the code in a file independent of the source code of the page when a saving operation for the code entered in the code editing interface is received, wherein the file is associated with the identifier of the extension point.

7. The apparatus according to claim 2, 4, 5 or 6, wherein the apparatus further comprises a rendering unit;
the rendering unit is configured to: after the saving operation for the code entered in the code editing interface is received, perform rendering on a corresponding page element based on the code; and
the presentation unit is further configured to display, in an area corresponding to the extension point in the page, a page element obtained through the rendering.

8. A page extension point presentation method, wherein the method comprises:
determining an extension point placeholder in source code of a page when the page is displayed, wherein the extension point placeholder is corresponding to an extension point in the page, and the extension point is an area that is used to extend a page element and that is in the page;
determining information about a location of the corresponding extension point in the page based on the extension point placeholder; and
presenting, in the page, a visual mark of the extension point based on the location information.

9. The method according to claim 8, wherein the method further comprises:
presenting, when a designated operation for the visual mark is received, a code editing interface corresponding to the extension point; and
receiving code entered in the code editing interface.

10. The method according to claim 8, wherein the determining information about a location of the corresponding extension point in the page based on the extension point placeholder comprises:
obtaining, based on the extension point placeholder, the information about the location of the extension point in the page by invoking an element object rectangular boundary obtaining method.

11. The method according to claim 9, wherein the method further comprises:
establishing an association relationship between the visual mark of the extension point and an identifier of the extension point.

12. The method according to claim 11, wherein the extension point placeholder comprises the identifier of the extension point when the code editing interface corresponding to the extension point is presented, and the presenting, when a designated operation for the visual mark is received, a code editing interface corresponding to the extension point comprises:
when the designated operation for the visual mark is received, obtaining the identifier that is of the extension point and that is associated with the visual mark;
performing searching in the source code of the page based on the identifier of the extension point, to obtain a row number that is of the extension point placeholder and that is in the source code of the page;
displaying the extension point placeholder in the source code of the page according to the row number, and displaying an editing portal control corresponding to the extension point placeholder; and
presenting the code editing interface when a trigger operation for the editing portal control is received.

13. The method according to claim 12, wherein the method further comprises:
saving the code in a file independent of the source code of the page when a saving operation for the code entered in the code editing interface is received, wherein the file is associated with the identifier of the extension point.

14. The method according to claim 9, 11, 12, or 13, wherein the method further comprises:
after the saving operation for the code entered in the code editing interface is received, performing rendering on a corresponding page element based on the code; and
displaying, in an area corresponding to the extension point in the page, a page element obtained through the rendering.
